Europäisches Patentamt

European Patent Office

Office européen des brevets

(19)

Veröffentlichungsnummer: **0 160 295 B1**

(12) **EUROPÄISCHE PATENTSCHRIFT**

(45) Veröffentlichungstag der Patentschrift: 05.06.91

(21) Anmeldenummer: 85105229.0

(22) Anmeldetag: 14.09.82

(51) Int. Cl.5 **A01F 15/14**

(60) Veröffentlichungsnummer der früheren
Anmeldung nach Art. 76 EPÜ: **0 075 252**

(54) **Bindeeinrichtung von Maschinen zum Herstellen von zylindrischen Ballen.**

(30) Priorität: 17.09.81 US 303274

(43) Veröffentlichungstag der Anmeldung:
06.11.85 Patentblatt 85/45

(45) Bekanntmachung des Hinweises auf die
Patenterteilung:
05.06.91 Patentblatt 91/23

(84) Benannte Vertragsstaaten:
**BE DE FR GB IT LU NL**

(56) Entgegenhaltungen:
**FR-A- 2 442 579**
**US-A- 4 150 614**

(73) Patentinhaber: **DEERE & COMPANY**
**1 John Deere Road**
**Moline, Illinois 61265(US)**

(72) Erfinder: **Meiers, Gerald Franklyn**
**1014 Chester**
**Ottumwa Iowa 52501(US)**

(74) Vertreter: **Fricke, Joachim, Dr. et al**
**Dr. R. Döring, Dr. J. Fricke, Patentanwälte**
**Josephspitalstrasse 7**
**W-8000 München 2(DE)**

EP 0 160 295 B1

**Beschreibung**

Die Erfindung betrifft eine Bindeeinrichtung von Maschinen zum Herstellen von zylindrischen Ballen aus Erntegut in einer Wickelkammer mit den Merkmalen des Oberbegriffs des Anspruchs 1.

Der Schnurführungsarm, der vor der Wickelkammer zum Umwickeln des Ballens mit der Bindeschnur hin- und hergeschwenkt werden muß, bedarf in der Regel einer ausreichend großen Länge, um die ganze Ballenbreite zu überstreichen und um bei Auslösung des Bindevorganges ein Schnurende so in den Bereich des in die Wickelkammer eintretenden Erntegutes zu halten, daß die Schnur mit dem Erntegut in die Wickelkammer eingezogen werden kann. Dem Einziehen der Schnur in die Wickelkammer muß dabei ein ausreichender Widerstand entgegengesetzt werden, damit der fertige Ballen mit der Schnur auch ausreichend straff umwickelt werden kann.

Um dies zu erreichen, ist aus der FR-A-2 442 579 eine Bindeeinrichtung mit den Merkmalen des Oberbegriffs des Anspruchs 1 bekannt. Zu diesem Zweck ist an dem langgestreckten U-förmigen Tragteil ein Lagerbock für einen quer zur Längsrichtung der Schnurführungsfläche verlaufenden Lagerbolzen vorgesehen, der außerhalb des Tragteils angeordnet ist und einen Schwenkteil aufnimmt, an dem ein L-förmiger Teil befestigt ist, dessen längerer Schenkel senkrecht zur Schnurführungsfläche verläuft und mit dem Schwenkzapfen verbunden ist, während der kürzere Schenkel in Bewegungsrichtung der Schnur vor dem Schwenkzapfen und dicht an der Schnurführungsfläche und parallel zu dieser angeordnet ist. An dem Schwenkteil greift außerdem eine Zugfeder an, die an einem im Abstand von dem Lagerbock an dem Tragteil befestigten Federwiderlager befestigt ist. Die Anordnung ist so getroffen, daß durch die Federwirkung der Schwenkteil um den Schwenkzapfen in einer Richtung verschwenkt wird, so daß der kürzere Schenkel des L-förmigen Teils eine Spannplatte bildet, die elastisch gegen die Schnurführungsfläche in Anlage gehalten ist, während die darunter hindurchlaufende Schnur bestrebt ist, den Schwenkteil entgegen der Federvorspannung zu verschwenken und die Spannplatte von der Schnurführungsfläche abzuheben.

Demgegenüber ist es Aufgabe der Erfindung eine Bindeeinrichtung mit den Merkmalen des Oberbegriffs des Anspruchs 1 so weiterzubilden, daß das Einfädeln der Schnur auch im Bereich der Spannvorrichtung wesentlich vereinfacht und erleichtert wird und dabei die Schnurspanneinrichtung in dem Tragteil geschützt und dennoch leicht zugänglich angeordnet werden kann.

Diese Aufgabe wird durch die Lehre des Anspruchs 1 gelöst.

Hierbei sind die Führungsstifte und die Montageeinrichtung der Spanneinrichtung innerhalb des langgestreckten U-förmigen Tragteil angeordnet und begrenzen zwischen sich im Bereich der Schnurführungsfläche eine Schnurführungsbahn. Führungsstifte und Spannvorrichtung sind dabei in dem U-förmigen Querschnitt des Tragteils geschützt aufgenommen. Da der Tragteil offen ist, sind die Teile dennoch leicht zugänglich. Damit ist die Schnur besonders sicher in dem offenen Tragteil geführt. Das Einlegen der Schnur im Bereich der Spannvorrichtung ist einfach, da die Schnur nach Anlegen an die Führungsstifte leicht unter die Spannplatte gezogen werden kann.

Dabei ist es besonders vorteilhaft, wenn die beiden Führungsstifte nicht nur zur Führung der Schnur sondern auch zur freien Führung der Spannplatte gemäß der Lehre des Anspruchs 2 ausgenützt werden. Dadurch wird die Anordnung weiter vereinfacht.

Entsprechendes gilt auch bei der Ausbildung der Montageeinrichtung gemäß der Lehre des Anspruchs 3.

Die Maßnahmen des Anspruchs 4 verhindern eine Beschädigung der Schnur beim Durchlaufen durch die Spannvorrichtung und erleichtern zugleich das Einfädeln der Schnur im Bereich der Spannvorrichtung.

Die Erfindung wird nachfolgend anhand schematischer Zeichnungen an einem Ausführungsbeispiel näher erläutert.

Es zeigen:

Figur 1    eine Maschine zum Herstellen von zylindrischen Ballen mit der Bindeeinrichtung gemäß der Erfindung, und zwar bei Ansicht von der rechten Seite (bezogen auf die Fahrtrichtung).

Figur 2    im größeren Maßstabe und im Ausschnitt einen Querschnitt durch die Wickelkammer im Bereich des Eintrittes für das Erntegut, wobei der Schnurführungsarm in einer die Schnur in die Wickelkammer einleitenden Betriebsstellung gezeigt ist.

Figur 3    in Ansicht eine Ausführungsform der Bindeeinrichtung gemäß der Erfindung, wobei diese in Richtung von vorne nach hinten, bezogen auf die Maschine, gesehen ist.

Figur 4    eine Seitenansicht der Bindevorrichtung nach Figur 3.

Figur 5    im größeren Maßstabe die Schnurspanneinrichtung nach Fig. 3 im Querschnitt entlang der Schnittlinie XIV-XIV.

Figur 6    im größeren Maßstabe eine Seitenansicht der Spanneinrichtung nach Fig. 3 und

Figur 7　eine allgemein schematische Ansicht der Schnurzuführungseinrichtung einschließlich des hydraulischen Schaltkreises.

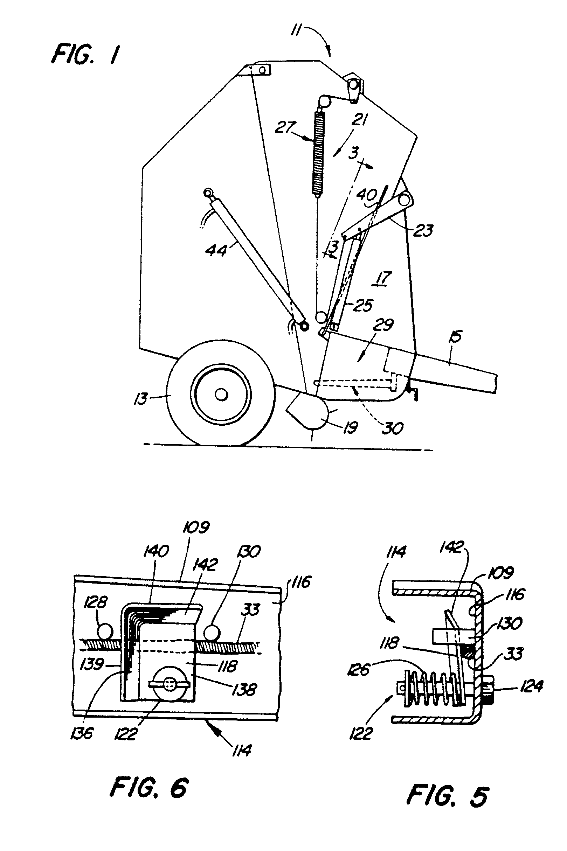

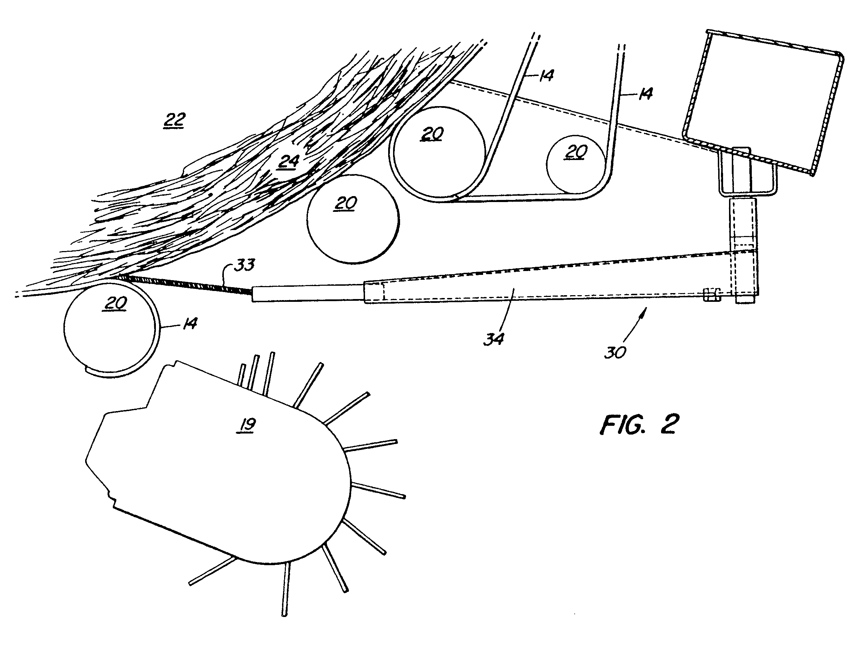

In Fig. 1 und 2 ist eine Maschine 11 zum Herstellen von zylindrischen Ballen großer Abmessungen aus Erntegut mit einer Bindeeinrichtung 12 gezeigt. Die Maschine weist zwei Laufräder 13 auf, so daß sie mittels Anhängeeinrichtung 15 von einem Ackerschlepper nachgezogen werden kann. Der Antrieb der Einrichtungen der Maschine erfolgt von der Zapfwelle des Ackerschleppers aus. Die Wickelkammer 22 ist zwischen zwei aufrechten Seitenwänden 17 und 18 und Riemen oder Bändern 14 gebildet, die über mehrere Querrollen 20 laufen. Das Erntegut wird von einem Aufnehmer 19 üblicher Bauart der Wickelkammer zugeführt. Eine Spanneinrichtung 21 überwacht die Dichte des Ballens. Sie besteht aus Steuerarmen 23 und hydraulischen Zylindern 25 sowie Federeinrichtungen 27. Die Spanneinrichtung wird bei Zunahme des Ballendurchmessers entsprechend gespannt. Sobald der Ballen seine Soll-Größe erhält wird der Bindevorgang automatisch ausgelöst.

Die Bindeeinrichtung 12 umfaßt eine Schnurabgabeeinrichtung 30 zum Einleiten einer Schnur in die Wickelkammer 22, Antriebsmittel 32 zum Hin- und Herbewegen eines Schnurführungsarmes 34, eine Steuereinrichtung 29 zum Auslösen des Bindezyklus durch Ertasten der Zunahme des Ballens 24 sowie Antriebsmittel 37 zum Antreiben einer hydraulischen Pumpe 38 mit Steuerventil 39, mittels der die Bindeeinrichtung betätigt wird. Nach dem Binden des Ballens wird die Schnur 33 durchtrennt und der fertige Ballen kann nach Öffnen der Wickelkammer durch die hydraulischen Zylinder 44 auf den Boden fallen.

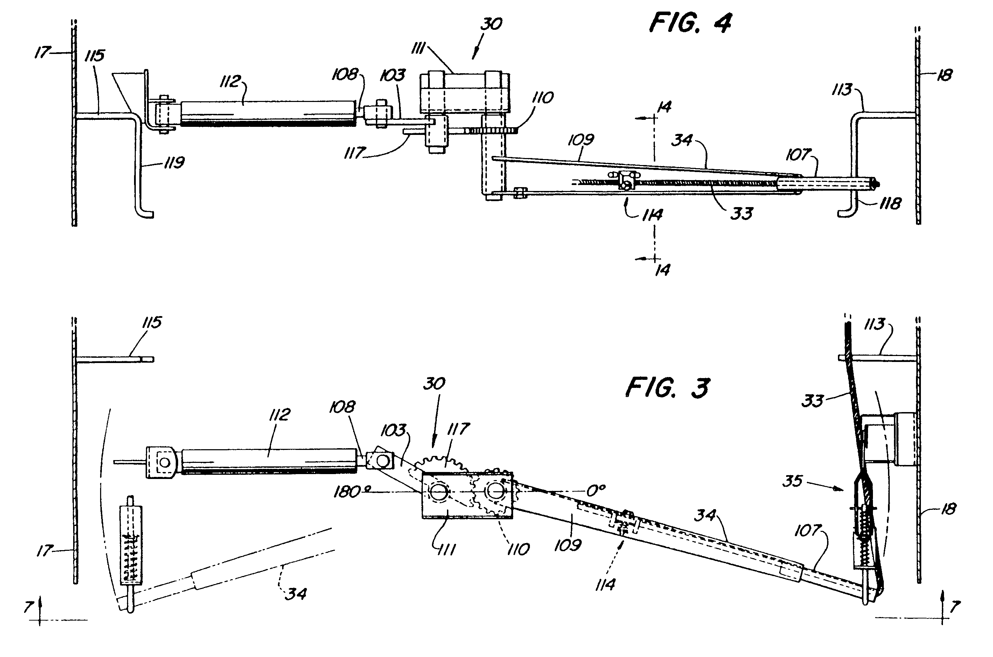

Die Figuren 3 bis 6 zeigen eine Ausführungsform einer Bindeeinrichtung 30 mit Schnurführungsarm 34. Dieser besteht aus einer rohrförmigen Führung 107 zur Aufnahme der Schnur, sowie aus einem langgestreckten U-förmigen Tragteil 109 mit einer Schnurspanneinrichtung 114 und einer Vorrichtung zum Zuführen der Schnur 33 zu dem Schnurführungsarm 34.

Der Tragteil 109 weist eine langgestreckte frei zugängliche Schnurführungsfläche 116 auf, entlang der die Schnur von der Abgabevorrichtung bis zum Eintritt in die rohrförmige Führung 107 geführt wird. Die rohrförmige Führung 107 ist wesentlich kürzer als der Tragteil 109, so daß das Einfädeln der Schnur wesentlich erleichtert wird, da diese über die frei zugängliche Schnurführungsfläche 116 geführt und lediglich durch eine Spannvorrichtung 114 gefädelt zu werden braucht, die im Bereich der Schnurführungsfläche angeordnet ist und die Schnur an dieser Fläche hält. Da die rohrförmige Führung 107 kurz ist, z.B. nur 16 cm lang, kann das Einfädeln mittels Hand ohne Verwendung irgendwelcher mechanischen Einfädelvorrichtungen leicht durchgeführt werden. Solche Einfädelvorrichtungen sind bei den bekannten Schnurführungsarmen erforderlich, die über ihre ganze Länge rohrförmig ausgebildet sind. Eine solche Hilfseinrichtung kann aus einer drahtförmigen Einfädelvorrichtung bestehen.

Die Spannvorrichtung 114 ist besonders einfach zum Einlegen der Schnur 33 auf die offene Führungsfläche 116 ausgebildet und liefert dennoch eine ausreichende Spannung für die Schnur 33, um zu verhindern, daß diese sich verwirrt oder nicht ordnungsgemäß zu der rohrförmigen Führung 107 gelangt. Die Spannvorrichtung 114 umfaßt eine Platte 118 und eine Montageeinrichtung 122. Diese umfaßt einen Stift 124 und eine koaxial darauf montierte Feder 126. Die Anordnung ist so getroffen, daß die Montageplatte 118 auf den Tragteil 109 kippbar montiert ist, wobei die Feder die Platte 118 gegen die Schnurführungsfläche 116 vorspannt. Zwei Führungsstifte 128,130 sind nahe den Eintritts- bzw. Austrittsseiten 136,138 der Spannplatte 118 angeordnet und bilden zusammen mit dem Stift 124 eine Schnurbahn durch die Spannvorrichtung 114. Die Eintrittsseite 136 weist eine abgeschrägte Kante 136 auf, welche eine leichte freie Bewegung der Schnur 33 durch die Spannvorrichtung 114 ermöglicht. Der Abstand zwischen den Stiften 128,130 ist annähernd gleich der Breite der Spannplatte 118 zuzüglich dem Durchmesser der Schnur 33. Dies bedeutet, daß die Schnur 33 zwischen den Plattenseiten 136,138 und den Stiften 128,130 vorbeigeführt werden kann, und zwar nacheinander während des Einfädelns. Eine obere Seite 140 erstreckt sich zwischen den Seiten 136,138 und weist ebenfalls eine abgeschrägte Kante 142 auf, welche ein leichtes Einsetzen der Schnur 33 unter die Platte 118 ermöglicht. Die Austrittskante 138 ist nicht abgeschrägt und liegt in der Ebene der Spannplatte 118, so daß sie an der Schnur 33 angreift und einem zufälligen Ausfädeln der Schnur 33 bei der Bewegung von rechts nach links in Fig. 4 entgegenwirkt.

Der Schnurführungsarm 34 wird vor der Wickelkammer zwischen einer ersten Stellung bei etwa -15° (hier als voll augezogene Stellung an der linken Seite der Maschine dargestellt) und einer zweiten Stellung bei etwa 195° (hier als gestrichelte Stellung wiedergegeben) bewegt. Der Schnurführungsarm 34 wird zwischen den beiden Stellungen durch einen hydraulischen Zylinder 112 der Antriebseinrichtung 32 bewegt. Der Schnurführungsarm 34 ist zu diesem Zweck mit einem Zahnglied 110 verbunden, das auf dem Tragteil 109 montiert ist. Der Zylinder 112 ist im Antriebseingriff mit dem Zahnglied 110 durch ein Glied 103, das schwenkbar an einem Ende an der Kolbenstange 108 des Zylinders 112 angelenkt ist und mit seinem anderen Ende an einem angetriebenen Zahnrad 117 befestigt ist. Das Letztere ist drehbar auf dem Stützteil 112 des Schnurführungsarmes mitten zwischen den Seitenwänden 17 und 18 montiert und steht in direktem Eingriff mit dem Zahnglied 110.

Schnurführungen 113 und 115 sind jeweils an den Seitenwänden 18,17 montiert, um die Bahn der Schnur 33 in die Wickelkammer zu begrenzen. Dadurch wird die Schnur 33 daran gehindert, sich näher an die Seitenwände 18,17 heranzubewegen als dies die senkrechten Schenkel 118,119 der Führungen ermöglichen. Dadurch erhält man zusätzliche Wicklungen am Ende des Ballens, und zwar in Verbindung mit dem großen Schwenkbereich des Schnurführungsarmes 34 zwischen den Stellungen bei -15° und +195°.

Bei Betrieb befindet sich der Schnurführungsarm 34 zunächst an der linken Seitenwand 18. Wenn ein Bindezyklus ausgelöst wird, und zwar durch die Steuereinrichtung 29, welche den gewünschten Durchmesser des Ballens abtastet wird ein Ventil 39 verstellt, um den Pumpenantrieb 37 zu aktivieren. Die Pumpe 38 speist den Zylinder 112 und der Kolben 108 wird ausgefahren. Dabei wird der Schnurführungsarm von seiner ersten Stellung auf der linken Seite in seine zweite Stellung auf der rechten Seite verschwenkt. Wenn der Arm 34 die Mitte zwischen den Seitenwänden erreicht wird das freie Ende der Schnur 33 von dem eintretenden Erntegut erfaßt und mit in die Ballenwickelkammer gezogen, wodurch der Bindevorgang ausgelöst wird. Der Bindevorgang beginnt in der Mitte des Ballens, zusätzliche Wicklungen werden jeweils an den Enden dem Ballens aufgebracht. Am Ende des Bindevorganges gelangt der Garnführungsarm in Eingriff mit dem Betätigungsarm 101, um die Verriegelung 95 zu losen, wenn die Kolbenstange 108 voll ausgefahren ist. Ein Ventilsteuerarm 89 wird dann von der Stellung B in die Stellung C bewegt, und zwar unter der Vorspannung der Feder 91. Dabei wird die Stellung des Ventils verändert, so daß der hydraulische Zylinder 112 eingefahren wird, um den Schnurführungsarm in seine ursprüngliche Stellung zurückzufahren. Wenn die Kolbenstange 108 voll eingefahren ist, greift der Schnurführungsarm 34 an einer Schnurtrenneinrichtung 35 an, um die Schnur zu durchtrennen.

Die Schnur 33 wird durch die Spannvorrichtung 114 dadurch eingefädelt, daß sie zunächst zwischen die abgeschrägte Kante 142 und die Schnurführungsfläche 116 eingelegt wird. Danach wird der Schnurabschnitt nahe der Eintrittsseite 136 der Spannplatte 118 nach außen und nach unten gezogen, wodurch die Spannplatte 118 im Uhrzeigersinne schwenkt. Damit kann die Schnur zwischen Kante 136 und Stift 128 hindurchtreten und liegt zwischen Stift 128 und Stift 124. Danach wird die Schnur nahe der Austrittskante 138 nach außen und nach unten gezogen, um die Spannplatte 118 im Gegenuhrzeigersinne zu schwenken, so daß die Schnur zwischen der Kante 138 und dem Stift 130 hindurchtreten kann und zwischen dem Stift 124 und dem Stift 130 zu liegen kommt. Der Einfädelvorgang wird dadurch beendet, daß die Schnur durch das kurze rohrförmige Endstück 107 der Führung geschoben wird.

Es ist ersichtlich, daß das Einfädeln der Schnur in den Schnurführungsarm 34 schnell und einfach und ohne die besondere Aufmerksamkeit oder Geschicklichkeit seitens des Fahrers durchgeführt werden kann, da alle Teile offen und frei zugänglich liegen.

Es ist für den Fachmann ohne weiteres ersichtlich, daß die Spanneinrichtung auch im Zusammenhang mit anderen Schnurführungsarmen verwendet werden kann.

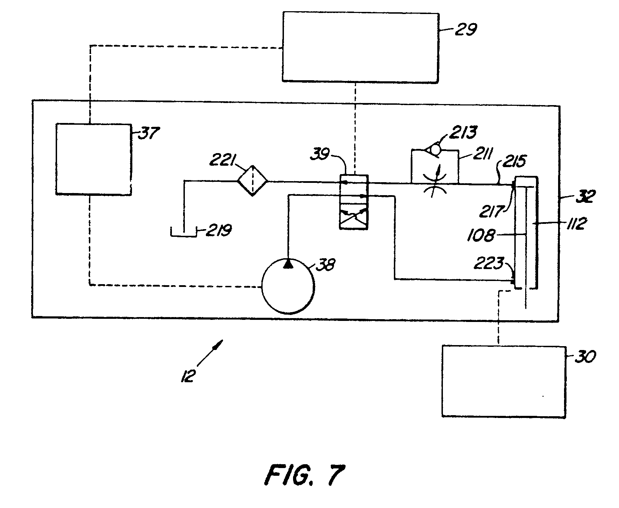

Die schematische Darstellung nach Fig. 7 zeigt die Teile der hydraulischen Antriebseinrichtung 32 für das Hin -und Herbewegen des Schnurführungsarmes 34. Es sind der doppelwirkende Zylinder 112, die Hyraulikpumpe 38, ein die beiden Teile verbindendes Vierwege/Zweistellungsschieberventil 34 gezeigt. Eine die Strömung steuernde Ventileinrichtungt ist bei 211 gezeigt. Diese ist so ausgelegt, daß die Zuströmung durch Leitung 215 zu dem Anschluß 217 des Zylinders 112 frei, d.h. ungesteuert, erfolgt, während die Abströmung durch die Leitung und über einen Filter 221 zum Sumpf 219 unter genauer Strömungssteuerung erfolgt. Figur 7 zeigt den hydraulischen Kreis in einer Stellung zwischen zwei Bindevorgängen. Der Steuerarm 89 für das Ventil befindet sich in der Stellung A. Die Pumpe 38 wird nicht angetrieben. Wenn die Steuereinrichtung 29 ein Verschwenken des Steuerarmes 89 aus der Stellung A in die Stellung B auslöst wird die Pumpe aktiviert und das Ventil 39 aus der dargestellten Stellung umgeschaltet, so daß die Pumpe 38 den Zylinder 112 über den Anschluß 217 frei speisen kann, während von dem Anschluß 223 das Druckmittel über Filter zum Sumpf zurückfließt. Der Kolben 115 mit Kolbenstange 108 werden ausgefahren und der Schnurführungsarm verschwenkt. Wenn der Steuerarm 89 aus der Stellung B in die Stellung C bewegt wird, wird das Ventil 39 zurückgestellt und das Druckmittel dem Anschluß 223 zugeführt, während der Abfluß über die Leitung 215 unter genauer Strömungssteuerung erfolgt. Der Kolben 115 und die Kolbenstange 108 fahren ein und der Schnurführungsarm wird zurückgeschwenkt. Am Ende des Hubes wird die Schnur 33 durch die Schneidvorrichtung 35 durchtrennt. Danach wird der Ballen ausgeworfen. Die Steuereinrichtung 29 schaltet die Pumpe aus und verstellt den Steuerarm 89 von Stellung C in Stellung A, ohne daß das Ventil 39 in seiner Stellung verändert wird. Die Anordnung ist bereit für den nächsten Bindevorgang.

## Ansprüche

1. Bindeeinrichtung von Maschinen zum Herstellen von zylindrischen Ballen aus Erntegut in einer Wickelkammer mit einem vor der Wickelkammer hin- und herbewegbaren Schnurführungsarm (34) der an seinem einen Ende schwenkbar unterstützt ist und an einem langgestreckten U-förmigen Tragteil (109) eine langgestreckte, frei zugängliche Schnurführungsfläche (116) und am freien Ende eine einen zentralen Durchgang für die Schnur aufweisende geschlossene Schnurführung (107) aufweist, deren Länge wesentlich geringer als die der Schnurführungsfläche (116) ist und bei der eine die Schnur (33) an der Schnurführungsfläche (116) haltende Spannvorrichtung (114) mit einer Spannplatte (118) vorgesehen ist, die mit Hilfe einer Vorspanneinrichtung (126) gegen die Führungsfläche (116) drängbar ist, dadurch **gekennzeichnet, daß** Führungsstifte (128, 130) im gegenseitigen Abstand und am Eingang (136) bzw. am Ausgang (138) der Spannvorrichtung (114) angeordnet sind, zwischen denen auf der einen Seite und einer Montageeinrichtung (122) der Spannvorrichtung auf der anderen Seite eine Schnurführungsbahn begrenzt ist.

2. Bindeeinrichtung nach Anspruch 1, dadurch **gekennzeichnet, daß** die Spannplatte (118) zwischen den beiden Führungsstiften (128,130) geführt ist, die nahe jeweils dem Schnureintritt (136) bzw. dem Schnuraustritt (138) der Spannplatte (118) angeordnet sind.

3. Bindeeinrichtung nach Anspruch 1 oder 2, dadurch **gekennzeichnet, daß** die Montageeinrichtung (122) zum Befestigen der Spannplatte (118) an der Führungsfläche (116) einen durch eine Öffnung des Tragteils (106) gefädelten Bolzen (14) und eine darauf gefädelte Feder (126) zum kippbaren Halten der Spannplatte (118) zwischen den Führungsstiften (128,130) aufweist.

4. Bindeeinrichtung nach Anspruch 2 oder 3, dadurch **gekennzeichnet, daß** eingangsseitig (136) die Einlaufkante der Spannplatte (118) von der Schnurführungsfläche (116) weg abgeschrägt ist und eine dritte Seite (142) aufweist, die sich parallel zur Schnurdurchlaufrichtung erstreckt und eine von der Führungsfläche weg abgeschrägte Kante (140) aufweist.

## Claims

1. A binding device on machines for producing cylindrical bales of harvested material in a binding chamber with, movable to and fro in front of said binding chamber, a twine guide arm (34) which is pivotally supported at one end, having on a longitudinally-extended U-shaped carrier portion (109) a longitudinally-extended, freely-accessible twine guide surface (116), and at the free end an enclosed twine guide (107) having a central passage for the twine, the length of said twine guide (107) being substantially less than that of the twine guide surface (116), and in which a tension device (114) holding the twine (33) against the twine guide surface (116) is provided with a clamping plate (118) which, with the aid of a prestressed tension means (126), can be forced against the guide surface (116), characterised in that guide pins (128, 130) are located at a mutual spacing and at the inlet (136) or at the outlet (138) of the tension device (114), between which, on one side, and an assembly device (122) on the other side, a twine guide track is defined.

2. A binding device according to Claim 1, characterised in that the clamping plate (118) is guided between the two guide pins (128, 130), which are respectively located close to the twine entry (136) and the twine exit (138) of the clamping plate (118).

3. A binding device according to Claim 1 or 2, characterised in that the assembly device (122) has, in order to attach the clamping plate (118) on the guide surface (116), a bolt (14) passed through an opening in the carrier portion (106), with threaded thereon a spring (126) for tiltably retaining the clamping plate (118) between the guide pins (128, 130).

4. A binding device according to Claim 2 or 3, characterised in that, at the inlet side (136), the inlet edge of the clamping plate (118) is bevelled away from the twine guide surface (116), and has a third side (142) extending parallel to the direction of passage of the twine, and has an edge (140) bevelled away from the guide surface.

## Revendications

1. Dispositif de liage installé dans des machines servant à former des balles cylindriques d'une récolte dans une chambre d'enveloppement, comportant un bras guide-ficelle (34) déplaçable en va-et-vient devant la chambre d'enveloppement et qui est soutenu, de manière à pouvoir pivoter, à l'une de ses extrémités et comporte, au niveau d'une partie de support allongée en forme de U (109), une surface allongée (116) de guidage de la ficelle, librement accessible, et, au niveau de son extrémité libre, un guideficelle fermé (107), qui possède un passage central pour la ficelle et dont la longueur est nettement inférieure à celle de la surface (116) de guidage de la ficelle et dans lequel il est prévu un dispositif de serrage (114), qui retient le fil (33) sur la surface (116) de guidage de la ficelle, comporte une plaque de serrage (118) et peut être repoussé, au moyen d'un dispositif de précontrainte (126), contre la surface de guidage (116), caractérisé en ce que des broches de guidage (128,130) sont disposées à une certaine distance l'une de l'autre à l'entrée (136) et à la sortie (138) du dispositif de serrage (114) et qu'une voie de guidage de la ficelle est délimitée entre les broches de guidage d'un côté et un dispositif de montage (122) du dispositif de serrage de l'autre côté.

2. Dispositif de liage selon la revendication 1, caractérisé en ce que la plaque de serrage (118) s'étend entre les deux tiges de guidage (128,130), qui sont disposées respectivement à proximité de l'entrée (136) de la ficelle et de la sortie (138) de la ficelle de la plaque de serrage (118).

3. Dispositif de liage selon la revendication 1 ou 2, caractérisé en ce que le dispositif de montage (122) comporte, pour la fixation de la plaque de serrage (118) sur la surface de guidage (116), une tige (14) insérée dans une ouverture de la partie supérieure (106) et un ressort (126) emmanché sur la tige et servant à maintenir, avec possibilité de basculement, la plaque de serrage (118) entre les tiges de guidage (128,130).

4. Dispositif de liage selon la revendication 2 ou 3, caractérisé en ce que côté entrée (136), le bord d'entrée de la plaque de serrage (118) forme un biseau s'écartant de la surface (116) de guidage de la ficelle et possède une troisième face (142) qui est parallèle à la direction de passage de la ficelle et possède un bord (140) comportant un biseau s'écartant de la surface de guidage.

FIG. 1

FIG. 6

FIG. 5

FIG. 2

EP 0 160 295 B1

FIG. 4

FIG. 3

9

**FIG. 7**